# EUROPÄISCHE PATENTSCHRIFT

(11) **EP 2 389 763 B1**
(45) Veröffentlichungstag und Bekanntmachung des Hinweises auf die Patenterteilung: **06.11.2013**
(21) Anmeldenummer: 10707828.9
(22) Anmeldetag: 01.03.2010
(51) Int. Cl.: H04N 7/26, H04N 7/34, H04N 7/50, H04N 7/15, H04L 29/06

(54) **MULTIPLEXVERFAHREN ZUM ZUSAMMENFASSEN DIGITALER VIDEOSIGNALE**
MULTIPLEX METHOD FOR COMBINING DIGITAL VIDEO SIGNALS
PROCÉDÉ MULTIPLEX POUR LE REGROUPEMENT DE SIGNAUX VIDÉO NUMÉRIQUES

(30) Priorität: 02.03.2009 DE 102009011251
(43) Veröffentlichungstag der Anmeldung: 30.11.2011
(73) Patentinhaber: Siemens Enterprise Communications GmbH & Co. KG, 81379 München (DE)
(72) Erfinder: AMON, Peter, 81675 München (DE); OERTEL, Norbert, 84032 Landshut (DE)
(74) Vertreter: Fritzsche, Thomas
(86) Internationale Anmeldenummer: PCT/EP2010/001253
(87) Internationale Veröffentlichungsnummer: WO 2010/099917

(56) Entgegenhaltungen:
- EP-A1- 1 126 710
- US-A1- 2005 231 588
- US-A1- 2006 146 734
- WIEGAND T ET AL: "Overview of the H.264/AVC video coding standard" IEEE TRANSACTIONS ON CIRCUITS AND SYSTEMS FOR VIDEO TECHNOLOGY, IEEE SERVICE CENTER, PISCATAWAY, NJ, US LNKD- DOI:10.1109/TCSVT.2003.815165, Bd. 13, Nr. 7, 1. Juli 2003 (2003-07-01), Seiten 560-576, XP011221093 ISSN: 1051-8215

## Beschreibung

Die Erfindung betrifft eine funktionelle Datenstruktur und ein Verfahren zur Generierung der funktionellen Datenstruktur. Die funktionelle Datenstruktur und das Verfahren sind geeignet für ein Multiplexverfahren zum Zusammenfassen digitaler Videosignale, das ebenfalls Gegenstand der Erfindung ist. Die Erfindung betrifft daher auch eine Codiersoftware zur Ausführung erfindungsgemäßer Verfahren und Multiplexverfahren sowie Datenträger und Datenverarbeitungsgeräte mit der Codiersoftware und/oder der funktionellen Datenstruktur.

Ein digitales Bild besteht aus einem Datensatz, der Tupel mit Angaben zu räumlichen Positionen und Farbwerten von Bildpunkten umfasst.

Als Farbwerte werden dabei häufig Farbwerte aus dem RGB-Farbraum (Rot-Grün-Blau-Farbraum), insbesondere dem RGB-Farbraum mit Werten von 0 bis 255 pro Farbkanal verwendet. Alternativ wird oft der YUV-Farbraum verwendet, bei dem die Farbwerte auf ein Luminanzsignal Y und zwei Chrominanzsignale U und V aufgeteilt werden.

Um eine praktikable Handhabung mit Vorgängen wie Speicherung und Datenübertragung über ein lokales Kommunikationsnetz oder ein Telekommunikationsnetz anzubieten, werden digitale Bilder komprimiert.

Zur Datenverarbeitung, insbesondere mit Kompressionsalgorithmen werden digitale Bilder im Stand der Technik in Makroblöcke von mit Farbwertangaben codierten Bildpunkten mit impliziten Positionsangaben unterteilt. Die Makroblöcke dienen dann der Analyse auf Redundanzen oder zur Definition von Kompressionseinheiten der digitalen Bilder.

Eine Kompression schreibt Daten in wenigstens
- einen ersten Datenstromteil, welcher einen um Redundanzen verminderten Teil eines Datensatzes umfasst, und
- einen, dem ersten Datenstromteil zugeordneten, zweiten Datenstromteil, welcher die Redundanzen beschreibt.

Der erste und zweite Datenstromteil können dabei vorzugsweise gemeinsam in einem Datenstrom codiert sein. Der erste und zweite Datenstromteil können auch auf je einen von zwei Datenströmen aufgeteilt sein.

Dabei können die ursprünglichen Daten aus dem ersten Datenstromteil anhand des zweiten Datenstromteils unter Wiedereinführung der Redundanzen wiederhergestellt werden.

Entsprechend können in Markoblöcke unterteilte digitale Bilder komprimiert sein in
- einen ersten Datenstromteil, welcher einen um wenigstens räumliche Redundanzen verminderten Teil der Makroblöcke, vorzugsweise aller Makroblöcke umfasst, und
- einen, dem ersten Datenstromteil zugeordneten, zweiten Datenstromteil, welcher die Redundanzen beschreibt.

Bei nicht verlustfreien Datenkompressionen werden zudem Daten entfernt, die bei einer Wiedergabe für die menschliche Wahrnehmung als unwesentlich betrachtet werden können. Diese werden bei der Dekompression nicht wiederhergestellt. Solche nicht verlustfreien Datenkompressionen sind z.B. für die Generierung von MP3-Dateien bekannt. Hochkomprimierte Dateiformate wie MP3 basieren auf Kombinationen von verlustfreien und nicht verlustfreien Datenkompressionen.

Eine Art, räumliche Redundanzen aus Bilddaten für eine Kompression zu entfernen, ist Intraprädiktion, wie sie z.B. beschrieben ist in dem US Patent 7,386,048, auf das zur Beschreibung beispielhafter Intraprädiktionen und Intraprädiktoren Bezug genommen wird.

Bei oben genannten Kompressionen von in Makroblöcken unterteilten digitalen Bildern in erste und zweite Datenstromteile können Intraprädiktionsmakroblöcke der Kompression dienen, indem
- der erste Datenstromteil vermindert wird um Farbwertangaben mit Korrelationen zu Farbwerten aus wenigstens einer Reihe von Bildpunkten, die außerhalb und an einem Rand des Intraprädiktionsmakroblocks angeordnet ist und
- der zweite Datenstromteil Intraprädiktoren zur Beschreibung der Korrelationen umfasst.

Die Korrelationen sind insbesondere Identität der Farbwerte von Bildpunkten oder Ähnlichkeiten der Farbwerte von Bildpunkten mit jenen der Reihe von Bildpunkten, die außerhalb und an einem Rand des Intraprädiktionsmakroblocks liegen.

Die Intraprädiktoren ergeben dabei Anweisungen, Farbwerte korrelierter Bildpunkte aus dieser Reihe oder diesen Reihen von Bildpunkten für einen Bildpunkt in dem Intraprädiktionsmakroblock zu übernehmen.

Enthält ein digitales Bild, das komprimiert wird, selbst keine solche Reihe von Bildpunkten, d.h. wenn ein Intraprädiktionsmakroblock einen mit dem Rand des digitalen Bildes gemeinsamen Rand hat, so nehmen Standardkompressionsalgorithmen eine Reihe von Bildpunkten mit einer Farbwertvorgabe an.

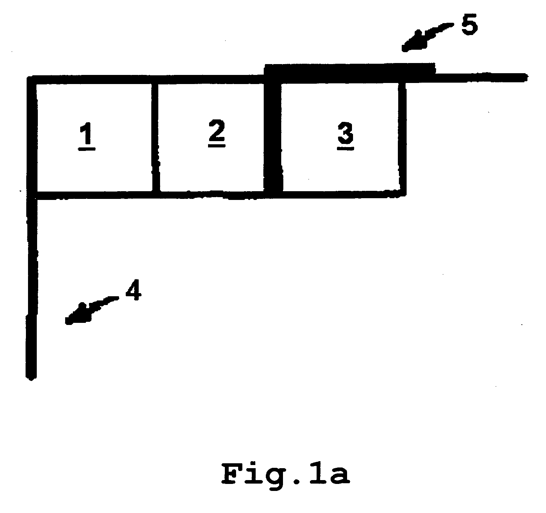

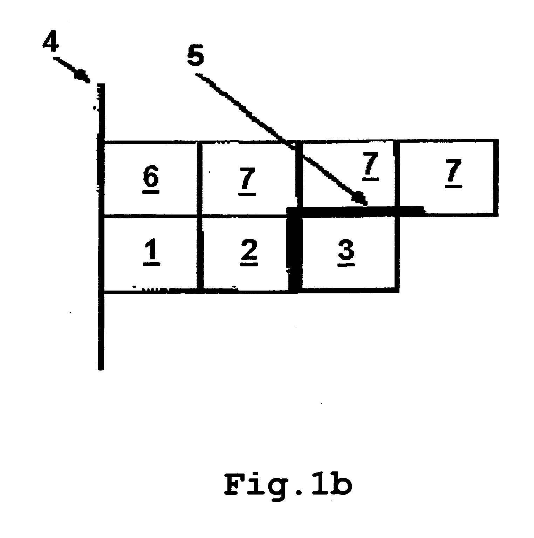

Dieser Aspekt von Bildkompressionen des Standes der Technik ist in Fig. 1a und 1b veranschaulicht.

Fig. 1a zeigt innerhalb eines Randes 4 eines digitalen Bildes drei gleichgroße Makroblöcke: Ein erster Makroblock 1 liegt in der oberen linken Ecke des digitalen Bildes. Einen zweiter Makroblock 2 beabstandet einen dritten Makroblock 3 von dem ersten Makroblock. Angrenzend an den dritten Makroblock 3 ist ein L-förmiger Bereich 5 von Bildpunkten dargstellt, die für eine DC-Intraprädiktion verwendet werden. Dabei werden für eine Kompression mit dieser DC-Intraprädiktion jene Bildpunkte des L-förmigen Bereichs 5, die außerhalb des Randes 4 liegen, d.h. in der Fig. 1a über dem dritten Makroblock 3 liegen, mit einer Farbwertvorgabe entsprechend dem Mittelgrauwert 128 aus dem RGB-Farbraum oder dem YUV-Farbraum mit Werten von 0 bis 255 angenommen.

In Fig. 1b gezeigt ist eine Anordnung des entsprechend komprimierten Makroblocks 3 in einem größeren Rahmen, der Teil eines digitalen Bildes ist. Bei diesem Bild sind über der Reihe der ersten, zweiten und dritten in Fig. 1 gezeigten Markoblöcke 1, 2, 3 weitere Makroblöcke 6, 7 in einer Reihe angeordnet. Bei der Dekompression des dritten Makroblocks 3 werden anhand der Intraprädiktoren des zweiten Datenstromteils Bildpunkten in diesem Block Farbwerte von Bildpunkten der den in Fig. 1b dargestellten L-förmigen Bereich 5 überlappenden Makroblöcke 7 zugewiesen. Dabei treten Zuweisungen auf, bei denen anstelle des bei der Kompression für einen Bildpunkt beschrieben Mittelgrauwerts ein anderer Farbwert aus einem Bildpunkt der überlappenden Makroblöcke 7 zugewiesen wird. Die Dekompression wird dadurch fehlerhaft.

Wenn Bildpunkte aus dem fehlerhaft dekomprimierten Makroblock 3 für weitere Intraprädiktionen bei Kompressionen oder Dekompressionen des digitalen Bildes verwendet werden, kann eine Fortpflanzung des Fehlers über große Teile des digitalen Bildes auftreten.

Wenn Bildpunkte aus dem fehlerhaft dekomprimierten Makroblock 3 für Interprädiktionen bei zeitlichen Bildsequenzen wie Videos verwendet werden, kann eine Fortpflanzung des Fehlers über eine lange Wiedergabeperiode eines Videos auftreten.

Bei Videobildsequenzen stehen Makroblöcke der Bilder, welche Luminanzbereiche von 16x16 Bildpunkten sein können, nicht nur in einem räumlichen sondern auch in einem zeitlichen Kontext.

Bei Softwareanwendungen in Computersystemen wie bei Videokonferenzanwendungen werden Bildaufnahmen mehrerer zeitlicher Sequenzen, d.h. Zeitwerten zugeordneten Bildern, erfasst und die zeitlichen Sequenzen sind untereinander synchronisiert. So werden bei Videokonferenzen von jedem Videokonferenzteilnehmer oder jeder Gruppe von Videokonferenzteilnehmern Videos aufgezeichnet, welche jeweils Bildaufnahmen einer zeitlichen Sequenz und zudem in der Regel Tonaufnahmen und ggf. weitere Aufnahmen umfassen. Diese Aufnahmen sind zeitlich synchronisiert, um den Videokonferenzteilnehmern oder Gruppen von Videokonferenzteilnehmern simultan die Wiedergabe der Aufnahmen aller oder mehrerer Videokonferenzteilnehmer oder Gruppen von Videokonferenzteilnehmern zu ermöglichen.

Die Aufnahmen der Videokonferenzteilnehmer oder Gruppen von Videokonferenzteilnehmern werden bei Videokonferenzanwendungen allgemein zu einem zentralen Server, wie einer Mehrpunktkontrolleinheit (MCU) über Datennetze übertragen, dort gesammelt und zu den Videokonferenzteilnehmern oder Gruppen von Videokonferenzteilnehmern über Datennetze zurückgesendet. Dabei müssen Aufnahmedaten komprimiert, zu einem zentralen Server gesendet, dort gesammelt, von dort komprimiert an die Teilnehmer oder Teilnehmergruppen gesendet und dann dekomprimiert und decodiert werden können.

Für Übertragung und Versendung von Daten über Datennetze bestimmen übertragene bzw. versendete Datenmengen die Beanspruchung von Hardware- und Netzwerkressourcen und sind limitierende Faktoren bei Videokonferenzanwendungen. Eine Kompression aufgenommener Daten ist daher essentiell.

Werden in einer Mehrpunktkontrolleinheit synchrone Videobildsequenzen verschiedener Videokonferenzteilnehmer in komprimierter Form zusammengestellt und an alle Videokonferenzteilnehmer versendet, so treten die oben in Verbindung mit Fig. 1a und 1b beschriebenen Probleme auf. Ein komprimierter Makroblock 3 eines Bildes einer empfangenen Videobildsequenz würde angrenzend an einen Makroblock 7 eines synchronen Bildes einer anderen Videobildsequenz angeordnet werden können und dann nach Empfang und Decodierung bzw. Dekompression der zusammengestellten Videobildsequenzen seitens der Videokonferenzteilnehmer Fehler und damit eine schlechte Bildqualität verursachen.

Nach dem Stand der Technik werden daher durch eine Mehrpunktkontrolleinheit empfangene komprimierte Aufnahmedaten vollständig dekomprimiert, neu zusammengestellt, danach erneut komprimiert und schließlich versendet. Entsprechende Verfahren beanspruchen Hardwareressourcen stark und können auch zu unakzeptablen Übertragungsverzögerungen führen.

Zur Kompression von Videodaten sind Kodierungsstandards bekannt wie insbesondere H.264|MPEG-4 AVC. In dem Videostandard H.264/AVC sind die folgenden Intraprädiktionen für Luma-Proben definiert:
- 8 gerichtete Intraprädiktionsmodi plus ein DC-Prädiktionsmodus für Blöcke mit 4x4 Bildpunkten,
- 8 gerichtete Intraprädiktionsmodi plus ein DC-Prädiktionsmodus für Blöcke mit 8x8 Bildpunkten,
- 3 gerichtete Intraprädiktionsmodi plus einen DC-Prädiktionsmodus für Blöcke mit 16x16 Bildpunkten.

Die gerichteten Intraprädiktionsmodi verwenden dabei wie in Fig. 1a und 1b veranschaulicht einen Bereich 5 mit einer bezüglich des betreffenden Intraprädiktionsblocks 3 oberen oder linken Reihe von Bildpunkten aus Blöcken 7, 2, die zu dem Intraprädiktionsblock 3 benachbart sind. Diese gerichteten Intraprädiktionsmodi weisen Kopiervorgänge zumindest einiger dieser Bildpunkte an Positionen in dem Intraprädiktionsblock an, die in einer vorgegebenen Richtung von dem kopierten Bildpunkt aus liegen. Diese Richtungen verlaufen von Schenkeln des in Fig. 1a und 1b dargestellten L-förmigen Bereichs 5 aus nach unten, rechts, oder in verschiedenen Diagonalen zu dem Intraprädiktionsblock 3 hin. Für die DC-Prädiktionsmodi wird ein Durchschnittsfarbwert von Bildpunkten eines in Fig. 1a und 1b dargestellten Bereichs 5 verwendet für Vorhersagen der Farbwerte aller Bildpunkte in dem Intraprädiktionsblock. Besonders in diesen DC-Prädiktionsmodi beeinträchtigen die oben in Verbindung mit Fig. 1a und 1b geschilderten Dekompressionsfehler sehr stark die Bildqualität.

Neuere Übertragungsformate, die H.264/AVC für Videodaten - siehe auch Wiegand Th. et al.: "Overview of the H.264/AVC video coding standard", IEEE Transactions on circuits and systems for video technology, IEEE service center, Piscataway, NJ, US, LNKD-DOI:10.1109/ TCSVT.2003.815165, Bd. 13, Nr. 7, 1. Juli 2003 (2003-07-01), Seiten 560-576, XP011221093, ISSN: 1051-8215 - entsprechen, erlauben die Zusammenstellung synchroner Videobildsequenzen verschiedener Videokonferenzteilnehmer als Gruppen von komprimierten Makroblöcken, indem sie Informationen codieren, die Intraprädiktionen, d.h. Intraprädiktionsmodi für Makroblöcke einer Videobildsequenz eines Videokonferenzteilnehmers untersagen, welche Bezug nehmen auf Bildpunkte außerhalb der Ränder der Bilder dieser Videobildsequenz. Diese Übertragungsformate sind jedoch nicht universell einsetzbar für Decodierer, welche diese Informationen nicht verarbeiten. Videokonferenzteilnehmern, die keine Decodierer nutzen, welche Informationen decodieren, die bestimmte Intraprädiktionen untersagen, können mit diesem Stand der Technik viele Videokonferenzen nicht empfangen. Die Versorgung zahlreicher Videokonferenzteilnehmer mit neuen konformen Decodierern ist besonders hinsichtlich der Kosten eine uneffiziente Lösung dieses Problems.

EP 1 126 710 A1 und US 2006/0146734 A1 offenbaren ein Verfahren und eine Vorrichtung zum Mischen von Videoströmen in der komprimierten Domäne.

Eine Aufgabe der Erfindung ist es, Nachteile des Standes der Technik zu überwinden. Eine weitere Aufgabe der Erfindung ist es, die Versendung von Zusammenstellungen komprimierter Aufnahmen von Videodaten in effizienter Weise, insbesondere hinsichtlich der erforderlichen Hard- und/oder Softwareressourcen zu ermöglichen. Eine weitere Aufgabe der Erfindung ist es, solche Zusammenstellungen seitens eines zentralen Servers ohne vorherige Dekompression in einfacher Weise und decodierbar für eine Vielzahl von Decodierertypen zu ermöglichen.

Die Erfindung betrifft zu diesem Zweck ein Verfahren nach Anspruch 1 zur Codierung eines Satzes von wenigstens zwei komprimierten von mindestens zwei Videoteilnehmern empfangenen digitalen Bildern in einer Mehrpunktkontrolleinheit, wobei die komprimierten digitalen Bilder zeitlich synchrone Bilder unterschiedlicher zeitlicher Bildsequenzen in unterschiedlichen Datensätzen der mindestens zwei Videoteilnehmer sind und in Makroblöcke von mit Farbwertangaben codierten Bildpunkten unterteilt sind, darunter Intraprädiktionsmakroblöcke; wobei die Codierung in einer Fläche erfolgt, die unterteilt ist in erste Flächen, von denen jede durch die besagten Makroblöcke eines der komprimierten digitalen Bilder besetzt wird, und eine zweite Fläche , durch die die ersten Flächen voneinander parallel beabstandet werden, wobei die zweite Fläche durch Bildpunkte mit einer Farbwertvorgabe für die Intraprädiktion besetzt wird, um Dekompressionsfehler bei Intraprädiktionen zu vermeiden, wobei alle Bildpunkte der zweiten Fläche diese Farbwertvorgabe haben und die zweite Fläche jeweils zwei der ersten Flächen parallel um einen Abstand entsprechend mindestens einem der quadratischen Makroblöcke beabstandet;
wobei jedes der Bilder komprimiert ist in wenigstens
- einen ersten Datenstromteil, welcher einen um wenigstens räumliche Redundanzen verminderten Teil der Makroblöcke umfasst, und
- einen, dem ersten Datenstromteil zugeordneten, zweiten Datenstromteil, welcher die Redundanzen beschreibt,
   wobei für jeden der Intraprädiktionsmakroblöcke
- der erste Datenstromteil vermindert ist um Farbwertangaben mit Korrelationen zu Farbwerten aus wenigstens einer Reihe von Bildpunkten, die außerhalb und an einem Rand des Intraprädiktionsmakroblocks angeordnet sind und für die im Fall von Bildpunkten außerhalb des komprimierten Bildes eine Farbwertvorgabe angenommen ist,
- und der zweite Datenstromteil Intraprädiktoren zur Beschreibung der Korrelationen umfasst.

Die Farbwerte können dabei Luminanz- und/oder Chrominanzwerte sein.

Die Makroblöcke können gleichgroße quadratische Flächen mit je einer gleichen Anzahl von Bildpunkten aufweisen.

Der erste Datenstromteil kann vermindert sein um Farbwertangaben mit Korrelationen zu Farbwerten aus wenigstens einer Reihe von Bildpunkten, die außerhalb und an einem Rand des Intraprädiktionsmakroblocks angeordnet sind. Dabei kann insbesondere die Reihe von Bildpunkten an einem oberen oder einem linken Rand angeordnet sein.

Die Erfindung sieht eine Codierung vor von einer Fläche, welche unterteilt ist in erste Flächen, von denen jede durch die Makroblöcke eines der digitalen Bilder besetzt ist, und eine zweite Fläche, welche die ersten Flächen voneinander beabstandet und durch Bildpunkte mit der Farbwertvorgabe besetzt ist.

Eine solche erfindungsgemäße Codierung vermeidet Dekompressionsfehler bei Intraprädiktionen, da die Farbwertzuweisungen von einer Farbwertvorgabe, wie sie oben in Verbindung mit Fig. 1a für randständige Makroblöcke eines Bildes beschrieben sind, auch bei Decodierung zusammengestellter Bilder dadurch sichergestellt werden, dass die zweite Fläche die ersten Flächen voneinander beabstandet und Bildpunkte mit der Farbwertvorgabe hat.

Vorteilhaft weisen die Makroblöcke gleichgroße quadratische Flächen mit je einer gleichen Anzahl von Bildpunkten auf und die zweite Fläche beabstandet jeweils zwei der ersten Flächen parallel um einen Abstand entsprechend einem der quadratische Makroblöcke. Es werden dadurch Daten bereitgestellt, die blockweise dekomprimierenden Standarddecodieren besonders gut angepasst sind.

Der in Fig. 1a veranschaulichte L-förmige Bereich 5 von Bildpunkten, die Prädiktionen für den Intraprädiktionsblock 3 dienen, überragt in der Fig. 1a rechts diesen Intraprädiktionsblock 3. Beim Komprimieren der digitalen Bilder kann daher die Farbwertvorgabe für Bildpunkte in dem den Intraprädiktionsblock 3 überragenden Bereich angenommen und für eine Intraprädiktion verwendet sein. Um Dekompressionsfehler bei Decodierung eines Satzes von Bildern zu vermeiden, bei denen der überragende Bereich in ein Bild dieses Satzes hineinragt, ist vorteilhaft weiter die zweite Fläche an einem Rand der in die zweite und die ersten Flächen unterteilten Fläche vorgesehen.

Insbesondere, wenn die Erfindung bei Videokonferenzsystemen angewandt wird, sind die digitalen Bilder zeitlich synchrone Bilder unterschiedlicher zeitlicher Bildsequenzen, insbesondere Datensätze von I-Frames von Videobildaufnahmen.

Der erste Datenstromteil ist dann vorteilhaft um räumliche und zeitliche Redundanzen vermindert, wobei insbesondere wenigstens ein Verfahren genutzt wird, das gewählt ist aus einer Kompression auf Basis einer Frequenzanalyse, insbesondere mittels diskreter Cosinustransformation, und/oder auf Basis einer Quantisierung und/oder einer Entropiecodierung.

Die oben beschrieben Verfahren und Datenstrukturen können eingesetzt werden in Multiplexverfahren zum Zusammenfassen digitaler Videosignale und können als Codiersoftware implementiert sein, welche vorteilhaft
- eine Einheit zum Empfang der komprimierten Bilder über ein Telekommunikationsnetz und
- eine Einheit zur Versendung von durch die Codiersoftware codierten Daten über ein Telekommunikationsnetz
umfasst.

Erfindungsgemäße Software oder Datenstrukturen werden auf Datenspeichermedien gespeichert.

Eine Datenverarbeitungsanlage mit einem solchen Datenspeichermedium, die mit einer Codiersoftware der Erfindung eingerichtet ist, ist daher auch ein Aspekt der Erfindung.

Aspekte und eine beispielhafte Ausführung der Erfindung werden nachfolgend unter Bezugnahme auf die Figuren beschrieben, in denen:
Fig. 1a und 1b Makroblöcke in unterschiedlichen Rahmen eines digitalen Bildes schematisch veranschaulichen und
Fig. 2 eine Datenstruktur gemäß der Erfindung schematisch veranschaulicht.

Fig. 1a und 1b veranschaulichen den Aufbau einer funktionellen Datenstruktur zur Codierung eines Satzes von zwei digitalen Bildern in einer konventionellen Mehrpunktkontrolleinheit. Die digitalen Bilder sind in Makroblöcke 1, 2, 3, 6, 7 von mit Positions- und Farbwertangaben codierten Bildpunkten unterteilt, darunter Intraprädiktionsmakroblöcke 3, wobei jedes der Bilder komprimiert ist. Eines der Bilder mit den Makroblöcken 1, 2, 3 an seinem Rand 4 wird bei der Mehrpunktkontrolleinheit empfangen und so zusammengestellt mit einem Datensatz mit Makroblöcken eines anderen der digitalen Bilder mit den Makroblöcken 6, 7, dass die Makroblöcke 7 Bildpunkte enthalten, auf die Intraprädiktoren für den Intraprädiktionsmakroblock 3 Bezug nehmen.

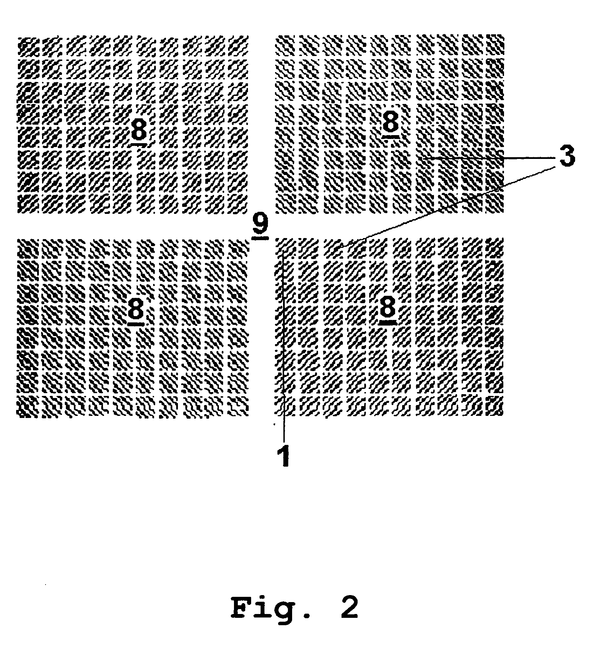

Eine solche Zusammenstellung ist in der in Fig. 2 gezeigten erfindungsgemäßen funktionellen Datenstruktur zur Codierung eines Satzes von vier digitalen Bildern vermieden.

Diese erfindungsgemäße funktionelle Datenstruktur wird in einer erfindungsgemäßen Mehrpunktkontrolleinheit aufgebaut mit einer Codierung einer Fläche, welche unterteilt ist in erste Flächen 8, von denen jede durch Makroblöcke 1, 3 von jeweils einem der vier digitalen Bilder besetzt ist, und eine zweite Fläche 9, welche die ersten Flächen 8 voneinander beabstandet. Die Makroblöcke 1, 3 sind komprimiert und umfassen Intraprädiktionsmakroblöcke 3, die vermindert sind um Farbwertangaben mit Korrelationen zu Farbwerten aus wenigstens einer Reihe von Bildpunkten, die außerhalb und an einem Rand des Intraprädiktionsmakroblocks angeordnet ist und für die im Fall von Bildpunkten außerhalb des komprimierten Bildes eine Farbwertvorgabe angenommen ist. Alle Bildpunkte der zweiten Fläche 9 haben diese Farbwertvorgabe.

Die erfindungsgemäße Mehrpunktkontrolleinheit empfängt vier digitale Bilder, die jeweils in Makroblöcke von mit Positions- und Farbwertangaben codierten Bildpunkten unterteilt sind, darunter Intraprädiktionsmakroblöcke, wobei jedes der Bilder nach dem H.264/AVC Standard komprimiert ist.

Die Makroblöcke 1, 3 weisen gleichgroße quadratische Flächen mit je einer gleichen Anzahl von Bildpunkten auf und die zweite Fläche 9 beabstandet jeweils zwei der ersten Flächen 8 parallel um einen Abstand entsprechend einem der quadratischen Makroblöcke 1, 3. In den ersten Flächen 8 sind damit zeitlich synchrone Bilder unterschiedlicher Datensätze von Frames von Videobildaufnahmen von vier Videoteilnehmern angeordnet. Die Videobildaufnahmen sind um räumliche und zeitliche Redundanzen vermindert entsprechend einer Kombination von Kompressionen nach dem H.264/AVC Standard.

Eine zeitliche Sequenz von Sätzen aus jeweils vier wie in Fig. 2 dargestellten komprimierten Bildern entsprechend den zeitlich synchronisierten Sequenzen der von den vier Videoteilnehmern empfangenen Videobildaufnahmen umfasst Datensätze mit der in Fig. 2 veranschaulichten Datenstruktur. Diese zeitliche Sequenz von Sätzen komprimierter Bilder wird von der Mehrpunktkontrolleinheit versendet. Zum Empfangen und Versenden hat die Mehrpunktkontrolleinheit
- eine Einheit zum Empfang der komprimierten Bilder über ein Telekommunikationsnetz und
- eine Einheit zur Versendung von durch die Codiersoftware codierten Daten über ein Telekommunikationsnetz.

Die versendeten Daten können mit einer Vielzahl von Decodieren hochqualitativ empfangen und angezeigt werden. Obwohl auf die Figuren in Zusammenhang mit einer Videokonferenzanwendung Bezug genommen ist, ist die Erfindung allgemein anwendbar auf Anwendungen, die eine Bereitstellung von Sätzen von komprimierten Bilddaten umfassen, von denen wenigstens ein Teil durch Intraprädiktion komprimiert vorliegen kann. Solche Anwendungen sind insbesondere für Web-Services Bildangebote im Internet interessant.

### Bezugszeichenliste

- 1, 2, 6, 7: Makroblöcke
- 3: Intraprädiktionsmakroblock
- 4: Rand
- 5: Bildpunktbereich für Intraprädiktionen
- 8: erste Fläche
- 9: zweite Fläche

## Patentansprüche

1. Verfahren zur Codierung eines Satzes von wenigstens zwei komprimierten von mindestens zwei Videoteilnehmern empfangenen digitalen Bildern in einer Mehrpunktkontrolleinheit, wobei die komprimierten digitalen Bilder zeitlich synchrone Bilder unterschiedlicher zeitlicher Bildsequenzen in unterschiedlichen Datensätzen der mindestens zwei Videoteilnehmer sind und in Makroblöcke (1, 2, 3, 6, 7) von mit Farbwertangaben codierten Bildpunkten unterteilt sind, darunter Intraprädiktionsmakroblöcke (1, 2, 3, 6, 7); wobei die Codierung in einer Fläche erfolgt, die unterteilt ist in erste Flächen (8), von denen jede durch die besagten Makroblöcke (1, 2, 3, 6, 7) eines der komprimierten digitalen Bilder besetzt wird, und eine zweite Fläche (9), durch die die ersten Flächen (8) voneinander parallel beabstandet werden, wobei die zweite Fläche (9) durch Bildpunkte mit einer Farbwertvorgabe für die Intraprädiktion besetzt wird, um Dekompressionsfehler bei Intraprädiktionen zu vermeiden, wobei alle Bildpunkte der zweiten Fläche (9) diese Farbwertvorgabe haben und die zweite Fläche (9) jeweils zwei der ersten Flächen (8) parallel um einen Abstand entsprechend mindestens einem der quadratischen Makroblöcke (1, 3) beabstandet;
wobei jedes der Bilder komprimiert ist in wenigstens
- einen ersten Datenstromteil, welcher einen um wenigstens räumliche Redundanzen verminderten Teil der Makroblöcke (1, 2, 3, 6, 7) umfasst, und
- einen, dem ersten Datenstromteil zugeordneten, zweiten Datenstromteil, welcher die Redundanzen beschreibt,
wobei für jeden der Intraprädiktionsmakroblöcke (1, 2, 3, 6, 7)
- der erste Datenstromteil vermindert ist um Farbwertangaben mit Korrelationen zu Farbwerten aus wenigstens einer Reihe von Bildpunkten, die außerhalb und an einem Rand (5) des Intraprädiktionsmakroblocks (3) angeordnet sind und für die im Fall von Bildpunkten außerhalb des komprimierten Bildes eine Farbwertvorgabe angenommen ist,
- und der zweite Datenstromteil Intraprädiktoren zur Beschreibung der Korrelationen umfasst.

2. Verfahren nach Anspruch 1, wobei die Makroblöcke (1, 2, 3, 6, 7) gleichgroße quadratische Flächen mit je einer gleichen Anzahl von Bildpunkten aufweisen.

3. Verfahren nach Anspruch 1 oder 2, wobei die Reihe von Bildpunkten an einem oberen oder einem linken Rand (5) angeordnet ist.

4. Verfahren nach einem der vorhergehenden Ansprüche, **dadurch gekennzeichnet, dass** die digitalen Bilder, die zeitlich synchrone Bilder unterschiedlicher zeitlicher Bildsequenzen sind, Datensätze von I-Frames von Videobildaufnahmen sind.

5. Verfahren nach Anspruch 4, wobei der erste Datenstromteil um räumliche und zeitliche Redundanzen vermindert ist.

6. Verfahren nach Anspruch 5, wobei der erste Datenstromteil vermindert ist durch wenigstens ein Verfahren, das gewählt ist aus einer Kompression auf Basis einer Frequenzanalyse, insbesondere mittels diskreter Cosinustransformation, und/oder auf Basis einer Quantisierung und/oder einer Entropiecodierung.

7. Codiersoftware in einer Mehrpunktkontrolleinheit, **gekennzeichnet durch** eine Einheit mit Programmschritten entsprechend einem Verfahren nach einem der vorhergehenden Ansprüche.

8. Codiersoftware nach Anspruch 7, umfassend:
- eine Einheit zum Empfang der komprimierten Bilder über ein Telekommunikationsnetz und
- eine Einheit zur Versendung von durch die Codiersoftware codierten Daten über ein Telekommunikationsnetz.

9. Datenspeichermedium, **dadurch gekennzeichnet, dass** es eine Codiersoftware nach Anspruch 7 oder 8 speichert.

10. Datenverarbeitungsanlage, die mit einer Codiersoftware nach Anspruch 7 oder 8 eingerichtet ist und ein Datenspeichermedium nach Anspruch 9 umfasst.

## Claims

1. Method for coding a set of at least two compressed digital images received from at least two video participants in a multipoint control unit, wherein the compressed digital images are chronologically synchronous images of different chronological image sequences in different data sets of the at least two video participants and are divided into macroblocks (1, 2, 3, 6, 7) of pixels coded with colour value statements, including intraprediction macroblocks (1, 2, 3, 6, 7); wherein the coding occurs in an area which is divided into first areas (8), each of which is occupied by the said macroblocks (1, 2, 3, 6, 7) of one of the compressed digital images, and a second area (9) by which the first areas (8) are spaced in parallel from each other, wherein the second area (9) is occupied by pixels with a colour value default for the intraprediction, to avoid decompression errors during intrapredictions, wherein all the pixels of the second area (9) have this colour value default and the second area (9) in each case spaces apart two of the first areas (8) in parallel by a distance corresponding to at least one of the quadratic macroblocks (1, 3);
wherein each of the images is compressed into at least
- a first data stream portion which comprises at least one portion of the macroblocks (1, 2, 3, 6, 7), said portion being reduced by at least physical redundancies, and
- a second data stream portion assigned to the first data stream portion, whereby said second data stream portion describes the redundancies,
whereby for each of the intraprediction macroblocks (1, 2, 3, 6, 7)
- the first data stream portion is reduced by colour value statements with correlations to colour values from at least one line of pixels which are arranged outside and on an edge (5) of the intraprediction macroblock (3) and for which a colour value default is assumed in the case of pixels outside the compressed image,
- and the second data stream portion comprises intrapredictors to describe the correlations.

2. Method according to claim 1, wherein the macroblocks (1, 2, 3, 6, 7) have quadratic areas of the same size, each of which have the same number of pixels.

3. Method according to claim 1 or 2, wherein the line of pixels is arranged on a top or a left edge (5).

4. Method according to any one of the previous claims, **characterised in that** the digital images, which are chronologically synchronous images of different chronological image sequences, are data sets of I-frames of video image recordings.

5. Method according to claim 4, wherein the first data stream portion is reduced by physical and chronological redundancies.

6. Method according to claim 5, wherein the first data stream portion is reduced by at least one method which is selected from a compression on the basis of a frequency analysis, in particular by means of discrete cosine transformation, and / or on the basis of a quantisation and / or entropic coding.

7. Coding software in a multipoint control unit, **characterised by** a unit with programme steps corresponding to a method according to any one of the previous claims.

8. Coding software according to claim 7, comprising:
- a unit to receive the compressed images by means of a telecommunications network and
- a unit to send data coded by the coding software by means of a telecommunications network.

9. Data storage medium, **characterised in that** it stores a coding software according to claim 7 or 8.

10. Data processing installation which is set up with a coding software according to claim 7 or 8 and comprises a data storage medium according to claim 9.

## Revendications

1. Procédé de codage d'un ensemble d'au moins deux images numériques comprimées reçues par au moins deux abonnés vidéo dans une unité de contrôle multipoint, sachant que les images numériques comprimées sont des images synchronisées dans le temps de diverses séquences d'image temporelles dans divers ensembles de données des deux abonnés vidéo ou plus et sont divisées en macroblocs (1, 2, 3, 6, 7) de points d'image codés avec des indications de valeurs de teinte, dont des macroblocs de prédiction intra (1, 2, 3, 6, 7), sachant que le codage est effectué dans une surface divisée en des premières surfaces (8), parmi lesquelles chaque surface est munie desdits macroblocs (1, 2, 3, 6, 7) d'une des images numériques comprimées, et en une deuxième surface (9), par laquelle les premières surfaces (8) sont tenues à distance les unes des autres de manière parallèle, sachant que la deuxième surface (9) est munie de points d'image présentant une spécification de valeur de teinte pour la prédiction intra afin d'éviter toute erreur de décompression lors de prédictions intra, sachant que tous les points d'image de la deuxième surface (9) sont dotés de ladite spécification de valeur de teinte et que la deuxième surface (9) tient à distance respectivement deux des premières surfaces (8) de manière parallèle d'une distance correspondant à au moins un des macroblocs (1, 3) quadratiques ;
sachant que chaque image est comprimée en au moins
- une première partie de flux de données, qui comprend une partie des macroblocs (1, 2, 3, 6, 7) diminuée d'au moins de redondances spatiales, et
- une deuxième partie de flux de donnée, associée à la première partie de flux de données, laquelle deuxième partie de flux de donnée décrit les redondances,
sachant que pour chaque macrobloc de prédiction intra (1, 2, 3, 6, 7),
- la première partie de flux de données est diminuée des indications de valeur de teinte présentant des corrélations avec des valeurs de teinte issues d'au moins une rangée de points d'image disposés en dehors ou sur un bord (5) du macrobloc de prédiction intra (3) et pour lesquels dans le cas de points d'image situés en dehors de l'image comprimée, on admet une spécification de valeur de teinte,
- et la deuxième partie de flux de données comprend des prédicteurs intra aux fins de la description des corrélations.

2. Procédé selon la revendication 1, sachant que les macroblocs (1, 2, 3, 6, 7) présentent des surfaces quadratiques de même dimension dotées respectivement d'un nombre égal de points d'image.

3. Procédé selon la revendication 1 ou 2, sachant que la rangée de points d'image est disposée au niveau d'un bord supérieur ou d'un bord à gauche (5).

4. Procédé selon l'une quelconque des revendications précédentes, **caractérisé en ce que** les images numériques, qui sont des images synchronisées dans le temps de diverses séquences temporelles d'image, sont des ensembles de données de trames I d'enregistrements vidéo.

5. Procédé selon la revendication 4, sachant que la première partie de flux de données est diminée de redondances spatiales et temporelles.

6. Procédé selon la revendication 5, sachant que la première partie de flux de données est diminuée par au moins un procédé, qui est choisi parmi une compression sur la base d'une analyse de fréquence, en particulier au moyen d'une transformation en cosinus discrète, et/ou sur la base d'une quantification et/ou d'un codage entropique.

7. Logiciel de codage dans une unité de contrôle multipoint, **caractérisé par** une unité présentant des phases de programme de manière à correspondre à un procédé selon l'une quelconque des revendications précédentes.

8. Logiciel de codage selon la revendication 7, comprenant :
- une unité servant à recevoir des images comprimées par l'intermédiaire d'un réseau de télécommunication ; et
- une unité servant à émettre des données codées par le logiciel de codage par l'intermédiaire d'un réseau de télécommunication.

9. Support de stockage de données, **caractérisé en ce qu'**il stocke un logiciel de codage selon la revendication 7 ou 8.

10. Système de traitement de données, qui est mis au point avec un logiciel de codage selon la revendication 7 ou 8 et qui comprend un support de stockage de données selon la revendication 9.
